Europäisches Patentamt

European Patent Office

Office européen des brevets

(11) Publication number: **0 015 769**
A1

(12) **EUROPEAN PATENT APPLICATION**

(21) Application number: 80300722.8

(51) Int. Cl.³: **B 27 B 5/38**, B 24 D 5/10

(22) Date of filing: 07.03.80

(30) Priority: 09.03.79 GB 7908373

(43) Date of publication of application: 17.09.80
Bulletin 80/19

(84) Designated Contracting States: **BE DE FR GB IT SE**

(71) Applicant: **DE BEERS INDUSTRIAL DIAMOND DIVISION (PROPRIETARY) LIMITED**, 8th Floor 45 Main Street, Johannesburg Transvaal (ZA)

(72) Inventor: **Bailey, Malcolm Wilfred, Charters, Ascot (GB)**
Inventor: **Notter, Theo Axel, Charters, Ascot (GB)**
Inventor: **Wright, Derek Norman, 24 Highfield, Great Holland Bracknell Berkshire (GB)**

(74) Representative: **Ellis-Jones, Patrick George Armine et al, J.A. KEMP & CO. 14 South Square Gray's Inn, London WC1R 5EU (GB)**

(54) Circular saws.

(57) A circular diamond saw with diamond impregnated segments (12) on its periphery has a saw disc composed of two laminae (10,11) wich are spaced apart. Coolant liquid is fed to the space (18) between them from the centre and passes out through gaps between the segments (12).

- 1 -

DESCRIPTION

CIRCULAR SAWS

THIS invention relates to circular saws of the kind comprising a hub, a disc radiating from the hub and cutting elements, such as diamond impregnated segments secured to the periphery of the disc.

Saws of the kind in question are characterised by noise at relatively high levels, particularly within the audible frequency range.

In Industrial Diamond Review of May, 1977, C.P. Hallez describes a saw designed to reduce the noise during sawing operations. In the saw which he describes the disc is made of an assembly of two thin steel laminae of different thicknesses, in such a way that the vibration modes of the first lamina are dampened by the second one and vice versa. To further dampen these vibrations, a substance is sandwiched between the laminae, the modulus of elasticity of the substance is very different to that of steel and has a consistency very near to rubber. With this saw a very substantial noise reduction is achieved and mainly in the high frequencies.

An object of the invention is to provide a saw of the kind in question with which relatively to single core discs noise in the audible frequency range is considerably reduced and also facilitates the application of coolant to the kerf being cut.

A circular saw according to the invention comprises a hub, a disc radiating from the hub and cutting elements secured to the periphery of the disc, in which the disc is composed of two laminae which are spaced apart, secured to the hub and are bridged at their peripheries for carrying the cutting elements with regular gaps between the elements, in which the hub is provided with a liquid swivel, and in which the liquid swivel communicates with the space between the laminae, so that in use the space is filled with coolant liquid.

In the drawings :
Figure 1 is a section through a circular saw, and
Figure 2 is a face view of a portion of a saw blade.

The saw illustrated in the drawings has two discs 10 and 11 spaced apart at their peripheries by diamond impregnated cutting segments 12 and at their hub portions by an annular rib 13 around a shaft 23. The whole is sandwiched between two drive flanges 20 and 21. The rib 13 is provided with a series of radial passages 14 which connect with axial passages 9 leading from an annular groove 15 in the drive flange 20. Facing the annular groove 15 is a water swivel 16 also formed with an annular groove 8. A feed pipe 17 supplies the groove 8 with cutting fluid under pressure.

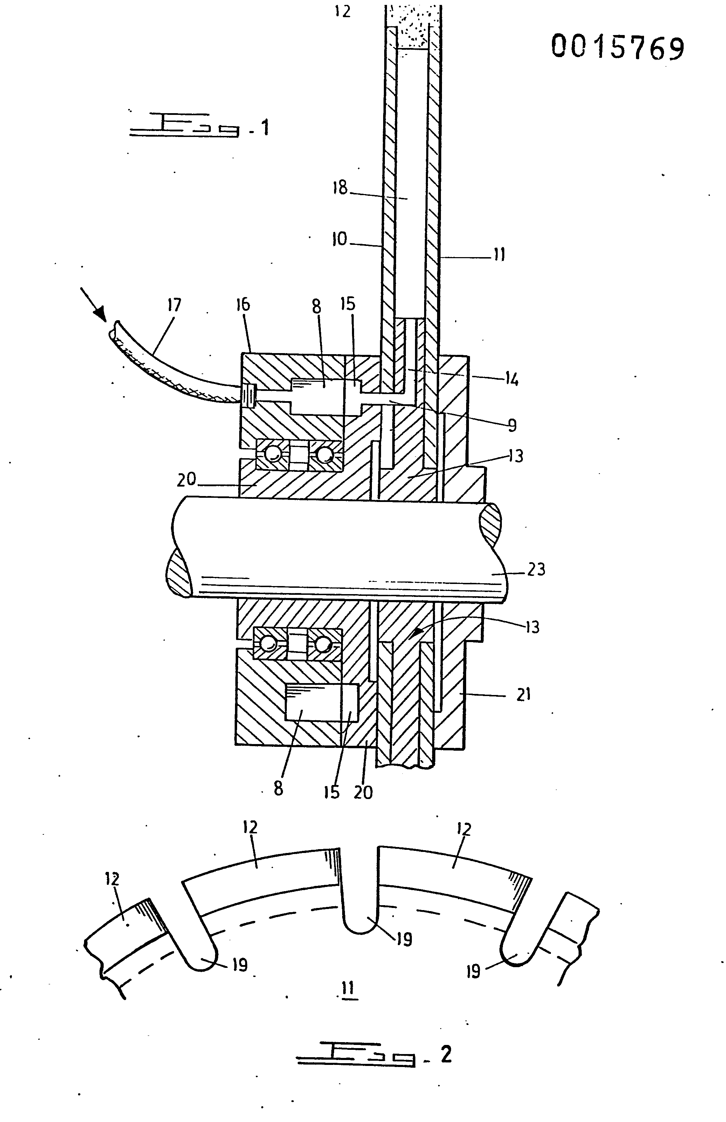

In use the cutting fluid flows from the pipe 17 to the space 18 between the discs 10 and 11 and out through the gulleys 19 (Figure 2) formed between segments 12.

The illustrated disc in use thus consists of a laminate composed of two outer discs 10 and 11 and a fluid filled intermediate lamina 18. The natural damping characteristics of such a disc are so altered that the audible noise in use is significantly reduced to the ear of an average observer.

As taught by Hallez the discs 10 and 11 could be made of different thicknesses, but it is believed that the improvements brought about by that would be minimal.

The invention not only increases the damping characteristics of the disc, but also ensures that coolant is applied where it is most needed.

## CLAIMS

1.

A circular saw comprising a hub, a disc radiating from the hub and cutting elements secured to the periphery of the disc, characterized in that the disc is composed of two laminae which are spaced apart, secured to the hub and are bridged at their peripheries for carrying the cutting elements with regular gaps between the elements, in which the hub is provided with a liquid swivel, and in which the liquid swivel communicates with the space between the laminae, so that in use that space is filled with coolant liquid.

2.

The circular saw claimed in claim 1 characterized in that the cutting elements are diamond impregnated.

Fig.1

Fig.2

11

## DOCUMENTS CONSIDERED TO BE RELEVANT

| Category | Citation of document with indication, where appropriate, of relevant passages | Relevant to claim |
|---|---|---|
| X | US - A - 3 282 263 (F.L. CHRISTENSEN et al.)<br>* claims 1, 2; fig. 2, 3 * | 1,2 |
| | DE - C - 834 518 (D. BRUINS)<br>* claims 1, 4; fig. 6 * | 1 |
| | DE - C - 34 151 (A.L. TAVERDON)<br>* page 1; fig. 2 * | 1,2 |

**CLASSIFICATION OF THE APPLICATION (Int. Cl.3)**

B 27 B    5/38
B 24 D    5/10

**TECHNICAL FIELDS SEARCHED (Int.Cl.3)**

B 23 D    59/02
B 24 D     5/10
B 27 B     5/38
B 27 B    33/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | |
|---|---|
| X | The present search report has been drawn up for all claims |

| Place of search | Date of completion of the search | Examiner |
|---|---|---|
| Berlin | 05-06-1980 | HOFFMANN |

EPO Form 1503.1  06.78